# EUROPÄISCHE PATENTSCHRIFT

(11) **EP 1 374 209 B1**
(45) Veröffentlichungstag und Bekanntmachung des Hinweises auf die Patenterteilung: **14.02.2007**
(21) Anmeldenummer: 02706777.6
(22) Anmeldetag: 21.03.2002
(51) Int. Cl.: G09F 19/22

(54) **FÖRDEREINHEITEN MIT WERBEMOTIVEN**
CONVEYOR UNITS COMPRISING ADVERTISING ILLUSTRATIONS
UNITES DE TRANSPORT COMPORTANT DES MOTIFS PUBLICITAIRES

(30) Priorität: 21.03.2001 DE 20104998 U
(43) Veröffentlichungstag der Anmeldung: 02.01.2004
(73) Patentinhaber: Binder, Norbert, 20253 Hamburg (DE)
(72) Erfinder: Binder, Norbert, 20253 Hamburg (DE)
(74) Vertreter: Viering, Jentschura & Partner
(86) Internationale Anmeldenummer: PCT/EP2002/003190
(87) Internationale Veröffentlichungsnummer: WO 2002/075703

(56) Entgegenhaltungen:
- EP-A- 0 478 866
- EP-A- 0 529 242
- WO-A-93/12020
- US-A- 6 044 961
- US-B1- 6 186 314

## Beschreibung

Die Erfindung bezieht sich auf das Gebiet der Gestaltung von Fördereinheiten, insbesondere von Fördereinheiten, die in Flughäfen verwendet werden. Diese Fördereinheiten werden zur Bereitstellung von Gepäck verwendet und weisen einen beweglichen Teil, der nachfolgend "Förderband" genannt wird und einen unbeweglichen Teil auf, der nachfolgend "Rahmen" genannt wird. Auf das Förderband werden Gepäckstücke ausgeladen, und durch das Drehen vom Förderband wird das Gepäckstück in die Nähe des Fluggastes befördert, so dass der Fluggast sein Gepäckstück einfach mitnehmen kann. Das Förderband besteht im allgemeinen aus Lamellen, die ineinander greifen, um ein reibungsloses Drehen des Förderbandes zu ermöglichen.

EP 0 476 866 beschreibt die Verwendung der Förderbänder als Werbeträger. Aus dieser Patentschrift ist eine Kombination bekannt, die ein endloses, modulares Förderband und wenigstens eine Einrichtung zum Anzeigen von Werbung auf dem genannten Förderband aufweist, wobei die Einrichtung eine Poster-Einheit ist, die aus einer synthetischen Klebefolie hergestellt ist, die mehr als einen Abschnitt aufweist, wobei die Länge der Posterbereiche zusammen größer als die maximale Längsabmessung einer der Bandplatten des Förderbandes ist, auf dem die Einrichtung angeordnet ist und die Einrichtung während des Umlaufs des Transportbandes verschiedene unterschiedliche Positionen einnimmt und jede Poster-Einheit nur entweder in den Abschnitten, in denen das Band eine ausgerichtete Position einnimmt, oder in den Bereichen, in denen das Band eine gekrümmte Position einnimmt, lesbar ist.

Der vorliegenden Erfindung liegt die Aufgabe zu Grunde, diesen Stand der Technik weiter zu verbessern, um eine effektivere Ausnutzung der gattungsgemäßen Förderbänder zu ermöglichen. Die Aufgabe wird dadurch gelöst, dass der um den Förderbändern angeordnete Rahmen mit der auf den Förderbändern beklebten Werbung eine Einheit bilden. Diese Lösung hat den Vorteil, dass die Förderbänder werbewirksamer sind, da mehr Werbefläche zur Verfügung steht, und dass die Aufmerksamkeit der Betrachter erhöht wird, da es sich hier um bewegliche Bilder handelt, die nur zu einem gewissen Zeitpunkt das Gesamtbild ergeben. Das Bekleben der Fördereinheiten erfolgt vorzugsweise durch eine selbstklebend, mehrschichtige Folie. Dafür eignen sich insbesondere spezielle Folien aus Kunststoff, die direkt auf das Förderband und auf den unbeweglichen Rahmen aufgebracht, vorzugsweise aufgeklebt werden. Besonders geeignet sind Folien, die eine hohe Reißfestigkeit aufweisen, leicht anbringbar und abziehbar sind, um den leichten Austausch von Bildern zu ermöglichen. Vorzugsweise werden Polycarbonat oder PVC Folien verwendet. Das Werbemotiv kann auf die Folie gedruckt und auf das Band einfach aufgeklebt werden. Alternativ kann die durchsichtige Folie als eine doppelseitig selbstklebende Folie gestaltet sein und das Werbemotiv kann auf das Förderband derart aufgeklebt werden, dass zunächst eine Folie auf das Förderband aufgeklebt wird, und auf die obere Klebeschicht der Folie wird dann das Werbemotiv aufgeklebt und abschließend mit einer einseitig selbstklebenden Folie fixiert. Die finale Aufbringung der Einzelsegmente der entsprechenden Folien kann mittels spezieller Schablonen durchgeführt werden, um eine einfache und wenig aufwendige Montage zu ermöglichen.

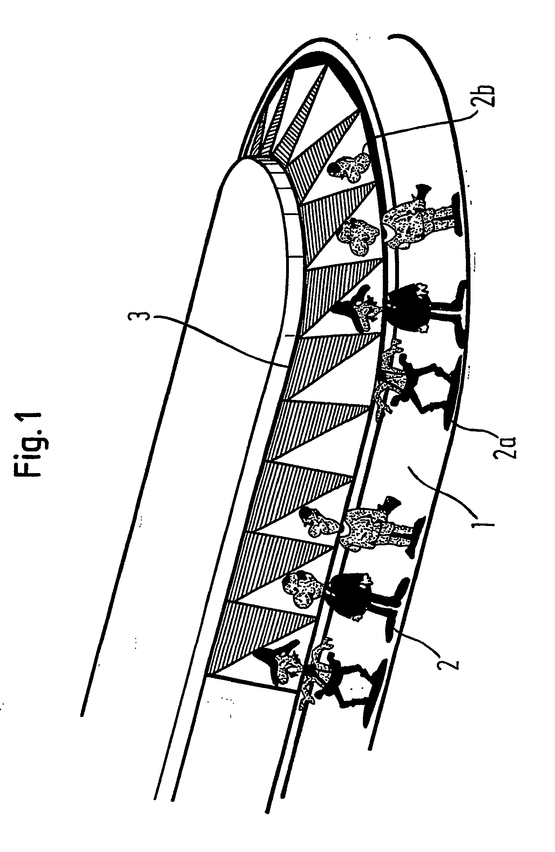

Die Erfindung wird anhand der Figur 1 näher erläutert.

Auf das Förderband (1) sind mehrere Werbemotive (2) aufgeklebt. Ein Teil des Werbemotivs (2a) ist auf dem Förderband aufgeklebt und das dazugehörige Teil (2b) auf dem Rahmen der Fördereinheit (3). Durch Bewegung des Förderbandes befinden sich die zwei Teile des Werbemotivs in der Nähe zueinander und bilden dadurch ein Gesamtbild (2). Der auf dem Förderband befindliche Teil des Werbemotivs kann sich über eine einzige Lamelle oder über mehrere Lamellen des Förderbandes erstrecken. Der Rahmen kann mit mehreren auf dem Förderband aufgeklebten Teilen ein Gesamtbild ergeben. Damit ist gewährleistet, dass die Flächen optimal genutzt werden.

In der Figur 1 ist nur der obere Teil des Rahmens mit den Teilen des Werbemotivs dargestellt. Es ist aber selbstverständlich, dass auch der untere Teil dafür benutzt werden kann und im Regelfall auch benutzt werden soll.

## Patentansprüche

1. Fördereinheit aufweisend ein Förderband (1) und der um das Förderband (2) angeordnete Rahmen (3), **dadurch gekennzeichnet, dass** sowohl das Förderband als auch der um das Förderband (1) angeordnete, unbewegliche Rahmen mit mindestens einem Werbemotiv beklebt sind, derart dass das auf dem Förderband aufgeklebte Teil des Werbemotivs mit dem auf dem unbeweglichen Rahmen aufgeklebten Teil des Werbemotivs eine zusammenhängende Einheit bilden, die durch die Bewegung des Förderbandes entsteht.

2. Fördereinheit nach Anspruch 1, **dadurch gekennzeichnet, dass** das Werbemotiv sowohl auf dem oberen als auch auf dem unteren Rahmen aufgeklebt wird.

3. Fördereinheit nach Anspruch 1, **dadurch gekennzeichnet, dass** das Werbemotiv sich über mehrere Lamellen des Förderbandes erstreckt.

4. Fördereinheit nach Anspruch 1, **dadurch gekennzeichnet, dass** das Werbemotiv auf einer selbstklebende Folie gedruckt wird.

5. Fördereinheit nach Anspruch 4, **dadurch gekennzeichnet, dass** die Folie aus PVC oder Polycarbonat hergestellt ist.

## Claims

1. Convey unit comprising a conveying belt (1) and a frame (3) disposed around the conveying belt (2), **characterized in that** at least one advertising motif is stuck on both the conveying belt and the stationary frame disposed around the conveying belt (1) such that the part of said advertising motif stuck on said conveying belt forms with the part of said advertising motif stuck on the stationary frame one continuous unit, which results from the movement of said conveying belt.

2. Convey unit according to claim 1, **characterized in that** the advertising motif is stuck on both the upper and the lower frame.

3. Convey unit according to claim 1, **characterized in that** said advertising motif extends over several lamellae of said conveying belt.

4. Convey unit according to claim 1, **characterized in that** said advertising motif is printed on a self-adhesive foil.

5. Convey unit according to claim 4, **characterized in that** said foil is made from PVC or polycarbonate.

## Revendications

1. Unité de transport comprenant une bande de transport (1) et un cadre (3) placé autour de cette bande de transport (2) **caractérisée par le fait que** aussi bien sur la bande de transport, que sur le cadre fixe disposé autour de la bande de transport (1) est placé par collage au moins un motif publicitaire de manière que la partie du motif publicitaire collée sur la bande de transport forme, avec la partie du motif publicitaire collée sur le cadre fixe, une unité connectée qui est créée par le mouvement de la bande de transport.

2. Unité de transport conforme à la revendication 1 qui est **caractérisée par le fait que** le motif publicitaire est placé par collage aussi bien sur le cadre supérieur que sur le cadre inférieur.

3. Unité de transport conforme à la revendication 1 qui est **caractérisée par le fait que** le motif publicitaire couvre plusieurs segments de la bande de transport.

4. Unité de transport conforme à la revendication 1 qui est **caractérisée par le fait que** le motif publicitaire est imprimé sur une feuille autocollante.

5. Unité de transport conforme à la revendication 4 qui est **caractérisée par le fait que** la feuille est fabriquée en P.V.C. ou en polycarbonate.
